# EUROPÄISCHE PATENTSCHRIFT

(11) **EP 4 357 544 B1**
(45) Veröffentlichungstag und Bekanntmachung des Hinweises auf die Patenterteilung: **24.06.2026**
(21) Anmeldenummer: 23199028.4
(22) Anmeldetag: 22.09.2023
(51) Int. Cl.: H02G 3/12, E03C 1/02

(54) **UNTERPUTZEINBAUKÖRPER FÜR EINE SANITÄRARMATUR**
BUILT-IN BUILT-IN BODY FOR A SANITARY FITTING
CORPS ENCASTRÉ POUR UNE ROBINETTERIE SANITAIRE

(30) Priorität: 18.10.2022 DE 102022127270
(43) Veröffentlichungstag der Anmeldung: 24.04.2024
(73) Patentinhaber: Grohe AG, 58675 Hemer (DE)
(72) Erfinder: BEGEROW, Hendrik, 58675 Hemer (DE); LUIG, Frank-Thomas, 58708 Menden (DE); BECKER Melanie, 58675 Hemer (DE); KRUSE, Jan Niclas, 44229 Dortmund (DE)

(56) Entgegenhaltungen:
- WO-A1-2024/017730
- KR-B1- 100 755 249
- US-A1- 2021 378 120
- US-B2- 7 308 907

## Beschreibung

Die vorliegende Erfindung betrifft einen Unterputzeinbaukörper für eine Sanitärarmatur gemäss dem Oberbegriff von Anspruch 1. Derartige Unterputzeinbaukörper sind insbesondere innerhalb eines Mauerdurchbruchs, einer Vertiefung in einer Wand oder einem sonstigen Träger befestigbar. Insbesondere bei Einbauwänden und Vorwandsystemen haben sich solche Unterputzeinbaukörper bewährt.

Unterputzeinbaukörper dienen der Befestigung einer Funktionseinheit in einer Mauer, in einer Wand oder an einem Träger. Hierzu weisen die Unterputzeinbaukörper ein Gehäuse mit einem Aufnahmeraum für die Funktionseinheit auf. Die Funktionseinheit kann Funktionskomponenten, wie zum Beispiel ein Mischventil und/oder zumindest ein Absperrventil, umfassen. Mittels des Mischventils sind Kaltwasser und Warmwasser zu Mischwasser mit einer gewünschten Mischwassertemperatur mischbar. Durch das Absperrventil ist eine Abgabe des Mischwassers steuerbar. Derartige Unterputzeinbaukörper sind beispielsweise aus US 7,308,907 B2 und KR 10-0755 249 B1 bekannt. Darüber hinaus sind andere Unterputzeinbaukörper beispielsweise aus WO 2024/017730 A1 und US 2021/0378120 A1 bekannt.

Die Funktionseinheit kann Funktionskomponenten umfassen, die über ein Kabel mit elektrischer Energie versorgt werden müssen. Hierzu muss das Kabel aus einer Umgebung des Unterputzeinbaukörpers durch eine Kabeldurchführung des Gehäuses in den Aufnahmeraum für die Funktionseinheit geführt werden. Die Umgebung des Unterputzeinbaukörpers muss gegen ein Austreten von Wasser aus dem Unterputzeinbaukörper geschützt werden, wozu die Kabeldurchführung abgedichtet werden muss. Das Abdichten der Kabeldurchführung ist jedoch aufwendig und/oder fehleranfällig.

Aufgabe der Erfindung ist es daher, die mit Bezug auf den Stand der Technik geschilderten Probleme zumindest teilweise zu lösen und insbesondere einen Unterputzeinbaukörper anzugeben, der ein Abdichten einer Kabeldurchführung eines Gehäuses des Unterputzeinbaukörpers erleichtert.

Diese Aufgabe wird gelöst mit einem Unterputzeinbaukörper gemäß den Merkmalen des unabhängigen Patentanspruchs.

Weitere vorteilhafte Ausgestaltungen der Erfindung sind in den abhängigen Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Unterputzeinbaukörper für eine Sanitärarmatur bei, der zumindest Folgendes aufweist:
a) ein Gehäuse mit einem Aufnahmeraum für eine Funktionseinheit; und
b) zumindest eine Platte, die an einer Außenwand des Gehäuses befestigt ist, sodass die zumindest eine Platte mit der Außenwand zumindest einen Kabelkanal für ein Kabel bildet, der sich von einer Kabeldurchführung der Außenwand des Gehäuses erstreckt.

Der Unterputzeinbaukörper ist insbesondere für eine Sanitärarmatur verwendbar, die Teil einer Wasserversorgungsinstallation eines Gebäudes sein kann. Bei der Sanitärarmatur kann es sich insbesondere um einen Wasserauslauf, eine Handbrause, eine Kopfbrause, zumindest eine Düse und/oder dergleichen handeln. Der Unterputzeinbaukörper ist insbesondere innerhalb eines Mauerdurchbruchs, einer Vertiefung in einer (Gebäude-)Wand oder an einem sonstigen Träger befestigbar.

Der Unterputzeinbaukörper umfasst ein Gehäuse mit einem Aufnahmeraum für eine Funktionseinheit. Das Gehäuse kann zumindest teilweise aus Kunststoff und/oder Metall bestehen. Das Gehäuse kann einen zylinderförmigen Abschnitt und/oder rohrförmigen Abschnitt aufweisen, der oder die den Aufnahmeraum für die Funktionseinheit zumindest teilweise bilden bzw. begrenzen können. Das Gehäuse, der zylinderförmige Abschnitt und/oder der rohrförmige Abschnitt können sich zumindest teilweise entlang einer, insbesondere geraden, Längsachse erstrecken. Das Gehäuse kann (insbesondere parallel zu der Längsachse) eine Gehäuselänge von beispielsweise 50 mm [Millimeter] bis 250 mm aufweisen. Das Gehäuse, der zylinderförmige Abschnitt und/oder der rohrförmige Abschnitt können (insbesondere orthogonal zu der Längsachse) einen Außendurchmesser von beispielsweise 100 mm bis 200 mm aufweisen.

Die Funktionseinheit kann ein Mischventil, beispielsweise nach Art eines Thermostatmischventils, und/oder zumindest ein Absperrventil umfassen. Mittels des Mischventils sind insbesondere Kaltwasser und Warmwasser zu Mischwasser mit einer gewünschten Mischwassertemperatur mischbar. Das Kaltwasser kann eine Kaltwassertemperatur aufweisen, die insbesondere maximal 25 °C (Celsius), bevorzugt 1 °C bis 25 °C, besonders bevorzugt 5 °C bis 20 °C beträgt. Das Warmwasser kann eine Warmwassertemperatur aufweisen, die insbesondere maximal 90 °C, bevorzugt 25 °C bis 90 °C, besonders bevorzugt 55 °C bis 65 °C beträgt. Das Mischwasser kann von dem Mischventil beispielsweise mit zumindest einer Leitung in der Funktionseinheit dem zumindest einen Absperrventil zuführbar sein, mittels dem eine Abgabe des Mischwassers über die Sanitärarmatur steuerbar ist. Die Funktionseinheit ist insbesondere zumindest teilweise in dem Aufnahmeraum des Gehäuses des Unterputzeinbaukörpers angeordnet und/oder ist im Wesentlichen zylinderförmig ausgebildet.

Das Gehäuse kann einen Kaltwasseranschluss für das Kaltwasser, einen Warmwasseranschluss für das Warmwasser und/oder zumindest einen Mischwasserauslass für das Mischwasser aufweisen. Beispielsweise kann das Gehäuse einen, zwei oder drei Mischwasserauslässe aufweisen. Der Kaltwasseranschluss ist insbesondere an eine Kaltwasserzuführleitung anschließbar, über die der Unterputzeinbaukörper mit einer Kaltwasserquelle, beispielsweise einem öffentlichen Wasserversorgungsnetz, verbindbar ist. Der Warmwasseranschluss ist insbesondere an eine Warmwasserzuführleitung anschließbar, über die der Unterputzeinbaukörper mit einer Warmwasserquelle, beispielsweise nach Art eines Boilers oder einer Zentralheizung, verbindbar ist. Das Kaltwasser ist von dem Kaltwasseranschluss und/oder das Warmwasser ist von dem Warmwasseranschluss insbesondere dem Mischventil zuführbar. Der zumindest eine Mischwasserauslass ist insbesondere mit zumindest einer Sanitärarmatur, beispielsweise über eine Verbindungsleitung, verbindbar, sodass der zumindest einen Sanitärarmatur das Mischwasser zuführbar ist. Die Kaltwasserzuführleitung, die Warmwasserzuführleitung und/oder die Verbindungsleitung können zumindest teilweise nach Art einer (insbesondere starren) Rohrleitung und/oder (insbesondere flexiblen) Schlauchleitung ausgebildet sein.

Der Unterputzeinbaukörper weist zumindest eine Platte auf. Die zumindest eine Platte kann zumindest teilweise aus Kunststoff und/oder Metall bestehen. Beispielsweise kann die zumindest eine Platte nach Art eines Kunststoffspritzgussteils ausgebildet sein. Die zumindest eine Platte kann insbesondere zumindest teilweise plattenförmig und/oder eben ausgebildet sein. Die zumindest eine Platte kann eine Plattendicke von beispielsweise 2 mm bis 20 mm, bevorzugt 2 mm bis 10 mm, besonders bevorzugt (im Wesentlichen) 6 mm, aufweisen. Die Plattendicke kann sich insbesondere orthogonal zu der Außenwand und/oder einer Rückwand des Gehäuses bemessen. Durch eine geringe Plattendicke ist gewährleistet, dass die zumindest eine Platte nur geringfügig bzw. nur um die Plattendicke auf der Außenwand bzw. der Rückwand des Gehäuses aufbaut. Hierdurch verringert sich eine Einbautiefenflexibilität bei der Montage des Unterputzeinbaukörpers innerhalb des Mauerdurchbruchs, der Vertiefung in der (Gebäude-)Wand oder an dem sonstigen Träger nur geringfügig. Die zumindest eine Platte kann eine, insbesondere ebene, Außenfläche aufweisen. Die Außenfläche der zumindest einen Platte kann eine Befestigungsfläche des Unterputzeinbaukörpers bilden, mit der der Unterputzeinbaukörper in dem Mauerdurchbruch, in der Vertiefung der (Gebäude-)Wand oder an dem Träger befestigbar ist. Insbesondere kann die Befestigungsfläche als Anlagefläche oder Kontaktfläche für den Mauerdurchbruch, die Vertiefung der (Gebäude-)Wand oder den Träger dienen. Die zumindest eine Platte kann zumindest eine erste Befestigungsausnehmung aufweisen, die mit zumindest einer zweiten Befestigungsausnehmung des Gehäuses fluchten kann. Die zumindest eine erste Befestigungsausnehmung und/oder die zumindest eine zweite Befestigungsausnehmung können nach Art einer (ersten) Bohrung oder (ersten) Öffnung ausgebildet sein. Die zumindest eine erste Befestigungsausnehmung und/oder die zumindest eine zweite Befestigungsausnehmung können parallel zu der Längsachse ausgebildet sein. Über die zumindest eine erste Befestigungsausnehmung und/oder die zumindest eine zweite Befestigungsausnehmung kann der Unterputzeinbaukörper beispielsweise mithilfe zumindest einer Schraube in dem Mauerdurchbruch, in der Vertiefung der (Gebäude-)Wand oder an dem Träger befestigbar sein.

Die zumindest eine Platte ist an einer Außenwand des Gehäuses befestigt. Die Befestigung der zumindest einen Platte an dem Gehäuse bzw. der Außenwand des Gehäuses kann beispielsweise mithilfe zumindest einer Befestigungseinrichtung, einer Schraubverbindung, einer Klebeverbindung, einer Klemmverbindung und/oder Rastverbindung, erfolgen. Die Außenwand kann den Aufnahmeraum für die Funktionseinheit insbesondere zumindest teilweise begrenzen. Die zumindest eine Platte kann die Außenwand zumindest teilweise überdecken. Die zumindest eine Platte kann eine Rückseite aufweisen, mit der die zumindest eine Platte zumindest teilweise auf der Außenwand des Gehäuses aufliegt. Die Rückseite der zumindest einen Platte und die Außenfläche der zumindest einen Platte können sich gegenüberliegen. Die zumindest eine Platte kann spiegelsymmetrisch ausgebildet sein.

Die zumindest eine Platte ist derart an der Außenwand des Gehäuses befestigt, dass die zumindest eine Platte mit der Außenwand einen Kabelkanal für ein Kabel bildet, der sich von zumindest einer Kabeldurchführung der Außenwand des Gehäuses erstreckt. Die Kabeldurchführung kann insbesondere nach Art eines Lochs, einer (zweiten) Öffnung und/oder einer (zweiten) Bohrung ausgebildet sein, die sich durch die Außenwand in den Aufnahmeraum für die Funktionseinheit erstreckt. Die Kabeldurchführung kann sich beispielsweise parallel zu der Längsachse erstrecken und/oder einen Durchmesser von beispielsweise 1 mm bis 20 mm aufweisen. Die Kabeldurchführung kann als Vertiefung und/oder Sollbruchstelle in der Außenwand ausgebildet sein. Die zumindest eine Platte ist insbesondere derart an der Außenwand des Gehäuses befestigt, dass sich die zumindest eine Platte über die Kabeldurchführung erstreckt. Der Kabelkanal ist insbesondere zwischen der zumindest einen Platte und der Außenwand gebildet. Der Kabelkanal kann zumindest teilweise durch die zumindest eine Platte und die zumindest eine Außenwand begrenzt sein. Der Kabelkanal weist parallel zu der Außenwand und entlang einer Kabelkanallängsachse eine Länge von beispielsweise 10 mm bis 100 mm und/oder (insbesondere orthogonal zu der Länge und/oder der Kabelkanallängsachse) eine Breite von beispielsweise 1 mm bis 10 mm aufweisen. Der Kabelkanal kann sich zumindest teilweise orthogonal zu der Längsachse erstrecken.

Das Kabel kann zumindest einen mit einem Isolierstoff ummantelten elektrischen Leiter umfassen. Das Kabel kann der Übertragung von elektrischer Energie und/oder Daten dienen. Das Kabel kann nach Art eines Elektrokabels und/oder Datenkabels ausgebildet sein. Das Kabel kann beispielsweise einen Kabeldurchmesser von 1 mm bis 10 mm aufweisen. Mit dem Kabel ist die elektrische Energie und/oder sind die Daten insbesondere der Funktionseinheit oder zumindest einer Funktionskomponente der Funktionseinheit zuführbar. Das Kabel kann mit einer Energiequelle und/oder Datenquelle verbindbar sein. Das Kabel kann sich von einer Umgebung des Unterputzeinbaukörpers durch den Kabelkanal und die Kabeldurchführung in den Aufnahmeraum für die Funktionseinheit erstrecken. Das Kabel kann vor der Befestigung der zumindest einen Platte an der Außenwand des Gehäuses durch die Kabeldurchführung hindurchgeführt werden. Hierdurch kann das Kabel einen Stecker aufweisen, der aufgrund seiner Größe nicht durch den Kabelkanal passen würde. Der Kabelkanal kann als Raum für eine Abdichtung dienen, sodass kein Wasser und/oder keine Feuchtigkeit durch den Kabelkanal bzw. durch die Kabeldurchführung in den Aufnahmeraum für die Funktionseinheit eintreten kann. Der Aufnahmeraum für die Funktionseinheit kann somit flüssigkeitsdicht ausgebildet und/oder flüssigkeitsdicht verschließbar sein, insbesondere unabhängig von einer Einbausituation des Unterputzeinbaukörpers. Die Erfindung löst zudem das Problem, dass die Umgebung des Unterputzeinbaukörpers an jedem Montageort anders ausgebildet sein kann, zum Beispiel als flache Wand oder (insbesondere nach hinten offener) Metallrahmen, etc. Durch die zumindest eine Platte wird ein definierter Raum geschaffen, der eine immer gleiche Geometrie aufweist, welche sich besonders zum Abdichten eignet.

Bei der Außenwand kann es sich um eine Rückwand des Gehäuses handeln. Die Rückwand kann (im Wesentlichen) eben ausgebildet sein. Die Rückwand kann sich zumindest teilweise orthogonal zu der Längsachse erstrecken. Die Rückwand kann an einem zu dem rohrförmigen Abschnitt und/oder zylinderförmigen Abschnitt des Gehäuses gegenüberliegenden längsseitigen Ende des Gehäuses ausgebildet sein.

Der Kabelkanal kann sich zumindest teilweise parallel zu der Außenwand erstrecken. Insbesondere kann sich der Kabelkanal vollständig parallel zu der Außenwand erstrecken.

Der Kabelkanal kann sich von der Kabeldurchführung zu einer Kabelkanalöffnung erstrecken. Die Kabelkanalöffnung ist insbesondere an einem längsseitigen Kabelkanalende ausgebildet. Die Kabelkanalöffnung verbindet den Kabelkanal insbesondere mit der Umgebung des Unterputzeinbaukörpers. Das Kabel kann sich durch die Kabelkanalöffnung in den Kabelkanal erstrecken.

Die Kabelkanalöffnung kann an einer Seitenwand ausgebildet sein. Hierdurch ist das Kabel seitlich aus dem Unterputzeinbaukörper und/oder seitlich hinter dem Unterputzeinbaukörper aus dem Unterputzeinbaukörper herausführbar. Die Kabelkanalöffnung kann in einer (ersten) Seitenwand der zumindest einen Platte und/oder in einer (zweiten) Seitenwand des Gehäuses ausgebildet sein. Die (erste und/oder zweite) Seitenwand kann sich orthogonal zu der Außenwand des Gehäuses, der Rückwand des Gehäuses, der Rückseite der zumindest einen Platte und/oder der Außenfläche der zumindest einen Platte erstrecken. Die Kabelkanalöffnung kann parallel zu dem Kaltwasseranschluss, dem Warmwasseranschluss und/oder dem zumindest einen Mischwasserauslass ausgebildet sein.

Die zumindest eine Platte weist zumindest eine Nut zur Ausbildung des Kabelkanals auf.

Die zumindest eine Nut kann auf der Rückseite der zumindest einen Platte ausgebildet sein. Die zumindest eine Nut weist (insbesondere ausgehend von der Rückseite und/oder orthogonal zu der Rückseite) eine Nuttiefe von beispielsweise 1 mm bis 10 mm und (insbesondere orthogonal zu der Nuttiefe und/oder parallel zu der Rückseite) eine Nutbreite von 1 mm bis 10 mm aufweisen.

Der Kabelkanal und/oder die Kabeldurchführung können mit einem Dichtmittel abgedichtet sein. Das Dichtmittel kann beispielsweise nach Art eines Klebstoffs und/oder einer Dichtmasse ausgebildet sein. Das Dichtmittel kann beispielsweise, insbesondere von dem Aufnahmeraum für die Funktionseinheit aus, in die Kabeldurchführung und/oder in den Kabelkanal gespritzt werden, nachdem das Kabel in den Kabelkanal angeordnet wurde. Das Dichtmittel ist somit insbesondere von dem Aufnahmeraum für die Funktionseinheit aus durch die Kabeldurchführung in den Kabelkanal spritzbar. Das Dichtmittel kann in dem Kabelkanal zumindest teilweise aushärten und/oder sich zumindest teilweise verfestigen. Das Dichtmittel kann sich insbesondere über bis zu 50 % der Länge des Kabelkanals erstrecken. Das Dichtmittel kann einen Spalt zwischen dem Kabel und dem Kabelkanal ausfüllen. Alternativ oder kumulativ kann das Dichtmittel nach Art eines Dichtrings oder einer Dichtmanschette ausgebildet sein. Der Dichtring oder die Dichtmanschette können das Kabel umgeben, sodass der Spalt zwischen dem Kabel und dem Kabelkanal abgedichtet ist.

Der Kabelkanal kann zumindest eine Zugentlastung aufweisen. Die zumindest eine Zugentlastung kann beispielsweise nach Art einer Rippe ausgebildet sein, die sich insbesondere in den Kabelkanal hineinerstreckt. Durch die zumindest eine Zugentlastung ist insbesondere eine auf das Kabel wirkende Zugkraft aufnehmbar bzw. auf das Gehäuse und/oder die zumindest eine Platte leitbar.

Die zumindest eine Platte kann auf die Außenwand aufgeschoben werden. Insbesondere kann die zumindest eine Platte auf die Außenwand gesteckt werden. Die zumindest eine Platte kann über eine Steckverbindung mit der Außenwand verbunden sein. Die Steckverbindung kann (insbesondere zerstörungsfrei) lösbar sein. Die zumindest eine Platte kann zumindest eine Befestigungseinrichtung aufweisen. Die zumindest eine Befestigungseinrichtung kann nach Art einer Befestigungsnut, Befestigungslasche oder Befestigungstasche ausgebildet sein. Die zumindest eine Befestigungseinrichtung kann an einem Rand der zumindest einen Platte ausgebildet sein.

Die zumindest eine Platte kann eine Mehrzahl, zum Beispiel zwei, Befestigungseinrichtungen aufweisen. Die Mehrzahl von Befestigungseinrichtungen können sich, insbesondere spiegelsymmetrisch, gegenüberliegen. Die zumindest eine Platte kann mit der zumindest einen Befestigungseinrichtung auf einen Befestigungsabschnitt der Außenwand aufgeschoben werden. Der zumindest eine Befestigungsabschnitt kann an einer Ecke der Außenwand ausgebildet sein. Der zumindest eine Befestigungsabschnitt kann in die zumindest eine Befestigungseinrichtung der zumindest einen Platte eingreifen. Die zumindest eine Platte ist insbesondere parallel zu der Außenwand, seitlich und/oder orthogonal zu der Längsachse auf die Außenwand aufgeschoben bzw. aufschiebbar.

An der Außenwand kann eine Mehrzahl von Platten befestigt sein. Beispielweise können an der Außenwand zwei, drei oder vier Platten befestigt sein. Die Platten können identisch zueinander ausgebildet sein. Jede Platte kann wie die zuvor beschriebene zumindest eine Platte ausgebildet sein. Die Platten können symmetrisch, insbesondere spiegelsymmetrisch, zueinander an der Außenwand befestigt sein, wobei die Längsachse in einer Symmetrieebene liegen kann. Die Außenflächen und/oder die Rückseiten der Platten können miteinander fluchten und/oder parallel zueinander verlaufen. Die Mehrzahl von Platten können mit der Außenwand eine Mehrzahl von Kabelkanäle für eine Mehrzahl von Kabeln bilden, wobei die Kabelkanäle sich jeweils von einer (separaten) Kabeldurchführung der Außenwand des Gehäuses erstrecken können. Durch die Platten kann das Kabel wahlweise auf einer (gewünschten) Seite des Gehäuses und/oder wahlweise auf einer von sich gegenüberliegenden Seiten des Gehäuses aus dem Gehäuse herausgeführt werden. Durch die Platten kann die Mehrzahl von Kabeln insbesondere auf gegenüberliegenden Seiten des Gehäuses aus dem Gehäuse herausgeführt werden. Jeder Kabelkanal der Mehrzahl von Kabelkanäle kann wie der zuvor beschriebene Kabelkanal, jedes Kabel der Mehrzahl von Kabeln kann wie das zuvor beschriebene Kabel und/oder jede Kabeldurchführung kann wie die zuvor beschriebene Kabeldurchführung ausgebildet sein.

Die Platten können jeweils zumindest eine Befestigungsöffnung aufweisen. Die zumindest eine Befestigungsöffnung kann sich vollständig durch die zumindest eine Platte und/oder parallel zu der Längsachse erstrecken. Durch die zumindest eine Befestigungsöffnung können die Platten bzw. zwei sich gegenüberliegende Platten mit zumindest einem Befestigungsmittel, beispielsweise nach Art eines Kabelbinders, aneinander fixiert bzw. miteinander verbunden werden. Hierdurch ist ein (ungewolltes) Lösen der Platten von der Außenwand verhinderbar.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein Unterputzeinbaukörper in einer perspektivischen Darstellung; und
- Fig. 2:: eine erste Platte des Unterputzeinbaukörpers in einer perspektivischen Darstellung.

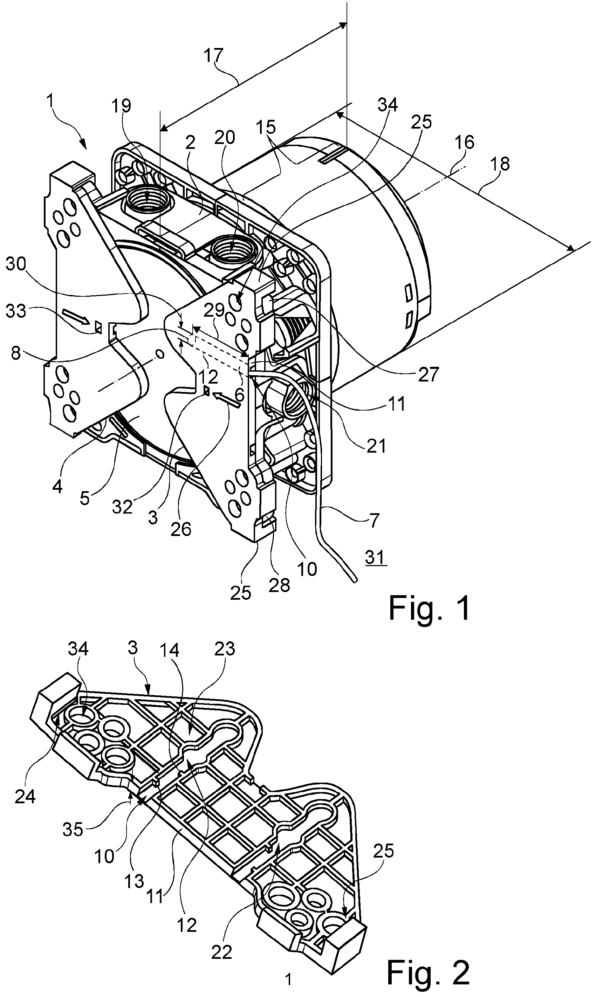

Die Fig. 1 zeigt einen Unterputzeinbaukörper 1 in einer perspektivischen Darstellung. Der Unterputzeinbaukörper 1 umfasst ein Gehäuse 2 mit einem zylinderförmigen Abschnitt 15, der sich entlang einer Längsachse 16 erstreckt. Das Gehäuse 2 weist parallel zu der Längsachse 16 eine Gehäuselänge 17 auf. Der zylinderförmige Abschnitt 15 weist orthogonal zu der Längsachse 16 einen Außendurchmesser 18 auf. In dem Gehäuse 2 ist ein hier nicht sichtbarer Aufnahmeraum für eine Funktionseinheit ausgebildet. Das Gehäuse 2 umfasst einen Kaltwasseranschluss 19 für Kaltwasser, einen Warmwasseranschluss 20 für Warmwasser und drei Mischwasserauslässe 21 für Mischwasser, wobei in der Fig. 1 nur einer von den drei Mischwasserauslässen 21 sichtbar ist.

Der Unterputzeinbaukörper 1 weist eine erste Platte 3 und eine zweite Platte 4 auf, die an einer Außenwand 5 bzw. Rückwand 9 des Gehäuses 2 spiegelsymmetrisch zueinander befestigt sind. Die Außenwand 5 bzw. die Rückwand 9 weist eine Kabeldurchführung 8 auf, über die sich die erste Platte 3 erstreckt, sodass die Kabeldurchführung 8 in der Fig. 1 durch die erste Platte 3 verdeckt und daher mit einem gestrichelten Kreis dargestellt ist. Die Kabeldurchführung 8 ist hier nach Art einer Bohrung ausgebildet, die sich parallel zu der Längsachse 16 durch die Außenwand 5 bzw. die Rückwand 9 in den Aufnahmeraum für die Funktionseinheit erstreckt.

Die Fig. 2 zeigt die erste Platte 3 in einer perspektivischen Darstellung mit Blick auf eine Rückseite 23, mit der die erste Platte 3 nach ihrer Befestigung an dem in der Fig. 1 gezeigten Gehäuse 2 an der Außenwand 5 bzw. der Rückwand 9 des Gehäuses 2 anliegt. Die erste Platte 3 und die in der Fig. 1 gezeigte zweite Platte 4 sind identisch ausgebildet, sodass die Beschreibung der ersten Platte 3 entsprechend auch für die zweite Platte 4 gilt. Die erste Platte 3 umfasst eine erste Befestigungseinrichtung 24 und eine zweite Befestigungseinrichtung 25, die hier nach Art von sich spiegelsymmetrisch gegenüberliegenden Befestigungsnuten ausgebildet sind. Mit den Befestigungseinrichtungen 24, 25 ist die erste Platte 3 in Richtung des in der Fig. 1 gezeigten Pfeils 26 parallel zu der Außenwand 5 bzw. der Rückwand 9 auf einen ersten Befestigungsabschnitt 27 und zweiten Befestigungsabschnitt 28 des Gehäuses 2 gesteckt, sodass die erste Platte 3 mit ihrer Rückseite 23 an der Außenwand 5 bzw. der Rückwand 9 des Gehäuses 2 anliegt. Dabei fluchten erste Befestigungsausnehmungen 34 der ersten Platte 3 mit in den Fig. 1 und 2 nicht sichtbaren zweiten Befestigungsausnehmungen des Gehäuses 2. Über die ersten Befestigungsausnehmungen 34 und zweiten Befestigungsausnehmungen des Gehäuses 2 ist der Unterputzeinbaukörper 1 beispielsweise mithilfe zumindest einer Schraube an einem hier nicht gezeigten Träger befestigbar.

Die erste Platte 3 weist auf ihrer Rückseite 23 eine erste Nut 12 und eine zweite Nut 22 auf. Die erste Nut 12 ist derart ausgebildet, dass die erste Nut 12 nach der Befestigung der ersten Platte 3 an dem Gehäuse 2 mit der Außenwand 5 bzw. der Rückwand 9 des Gehäuses 2 einen Kabelkanal 6 bildet (vgl. Fig. 1). Durch den Kabelkanal 6 ist ein Kabel 7 von einer Umgebung 31 des Unterputzeinbaukörpers 1 in den Aufnahmeraum des Gehäuses 2 führbar. Nach der Anordnung des Kabels 7 ist in den Kabelkanal 6 ein hier nicht gezeigtes Dichtmittel, beispielsweise nach Art eines Klebstoffs und/oder einer Dichtmasse, spritzbar, sodass durch den Kabelkanal 6 keine Flüssigkeit und/oder Feuchtigkeit durchtreten kann. Der Kabelkanal 6 erstreckt sich von der Kabeldurchführung 8 parallel zu der Außenwand 5 bzw. der Rückwand 9 zu einer Kabelkanalöffnung 10, die an einer Seitenwand 11 der ersten Platte 3 ausgebildet ist. Der Kabelkanal 6 weist parallel zu der Außenwand 5 bzw. der Rückseite 9 eine Länge 29 und (orthogonal zu der Länge) eine Breite 30 auf. Die erste Nut 12 weist senkrecht zu der Rückwand 23 eine Nuttiefe 35 auf (vgl. Fig. 2). Die erste Nut 12 weist eine erste Zugentlastung 13 und eine zweite Zugentlastung 14 für das Kabel 7 auf, wobei die erste Zugentlastung 13 und die zweite Zugentlastung 14 nach Art von in die erste Nut 12 ragende Rippen ausgebildet sind. Die erste Nut 12 und die zweite Nut 22 sind identisch ausgebildet. Die erste Platte 3 ist spiegelsymmetrisch ausgebildet.

Die erste Platte 3 weist eine erste Befestigungsöffnung 32 und die zweite Platte 4 eine zweite Befestigungsöffnung 33 auf (vgl. Fig. 1). Über die Befestigungsöffnungen 32, 33 sind die Platten 3, 4 mit einem hier nicht gezeigten Befestigungsmittel, beispielsweise nach Art eines Kabelbinders, untereinander fixierbar bzw. miteinander verbindbar. Hierdurch ist ein ungewolltes Lösen der Platten 3, 4 von dem Gehäuse 2 verhinderbar.

Die vorliegende Erfindung erleichtert ein Abdichten der Kabeldurchführung 8.

### Bezugszeichenliste

- 1: Unterputzeinbaukörper
- 2: Gehäuse
- 3: erster Platte
- 4: zweite Platte
- 5: Außenwand
- 6: Kabelkanal
- 7: Kabel
- 8: Kabeldurchführung
- 9: Rückwand
- 10: Kabelkanalöffnung
- 11: Seitenwand
- 12: erste Nut
- 13: erste Zugentlastung
- 14: zweite Zugentlastung
- 15: zylinderförmiger Abschnitt
- 16: Längsachse
- 17: Gehäuselänge
- 18: Außendurchmesser
- 19: Kaltwasseranschluss
- 20: Warmwasseranschluss
- 21: Mischwasserauslass
- 22: zweite Nut
- 23: Rückseite
- 24: erste Befestigungseinrichtung
- 25: zweite Befestigungseinrichtung
- 26: Pfeil
- 27: erster Befestigungsabschnitt
- 28: zweiter Befestigungsabschnitt
- 29: Länge
- 30: Breite
- 31: Umgebung
- 32: erste Befestigungsöffnung
- 33: zweite Befestigungsöffnung
- 34: erste Befestigungsausnehmung
- 35: Nuttiefe

## Patentansprüche

1. Unterputzeinbaukörper (1) für eine Sanitärarmatur, zumindest aufweisend:
a) ein Gehäuse (2) mit einem Aufnahmeraum für eine Funktionseinheit; und
b) zumindest eine Platte (3, 4), die an einer Außenwand (5) des Gehäuses (2) befestigt ist, **dadurch gekennzeichnet, dass** so die zumindest eine Platte (3, 4) mit der Außenwand (5) zumindest einen Kabelkanal (6) für ein Kabel (7) bildet, der sich von einer Kabeldurchführung (8) der Außenwand (5) des Gehäuses (2) erstreckt und der parallel zu der Außenwand (5) und entlang einer Kabelkanallängsachse eine Länge (29) aufweist, wobei die zumindest eine Platte (3, 4) zumindest eine Nut (12, 22) zur Ausbildung des Kabelkanals (6) aufweist, die eine Nuttiefe (35) und eine Nutbreite aufweist.

2. Unterputzeinbaukörper (1) nach Patentanspruch 1, wobei es sich bei der Außenwand (5) um eine Rückwand (9) des Gehäuses (2) handelt.

3. Unterputzeinbaukörper (1) nach einem der vorhergehenden Patentansprüche, wobei sich der Kabelkanal (6) von der Kabeldurchführung (8) zu einer Kabelkanalöffnung (10) erstreckt.

4. Unterputzeinbaukörper (1) nach Patentanspruch 3, wobei die Kabelkanalöffnung (10) an
einer Seitenwand (11) der zumindest einen Platte (3, 4) und/oder des Gehäuses (2) ausgebildet ist.

5. Unterputzeinbaukörper (1) nach einem der vorhergehenden Patentansprüche, wobei der Kabelkanal (6) oder die Kabeldurchführung (8) mit einem Dichtmittel abgedichtet ist.

6. Unterputzeinbaukörper (1) nach einem der vorhergehenden Patentansprüche, wobei der Kabelkanal (6) zumindest eine Zugentlastung (13, 14) für das Kabel (7) aufweist.

7. Unterputzeinbaukörper (1) nach einem der vorhergehenden Patentansprüche, wobei die zumindest eine Platte (3, 4) auf die Außenwand (5) aufgeschoben ist.

8. Unterputzeinbaukörper (1) nach einem der vorhergehenden Patentansprüche, wobei an der Außenwand (5) eine Mehrzahl von Platten (3, 4) befestigt ist.

## Claims

1. A flush-mounted built-in body (1) for a sanitary fixture, comprising at least:
a) a housing (2) with a receiving space for a functional unit; and
b) at least one plate (3, 4) fastened to an outer wall (5) of the housing (2), **characterized in that** the at least one plate (3, 4), together with the outer wall (5), forms at least one cable duct (6) for a cable (7), which cable channel extends from a cable feedthrough (8) in the outer wall (5) of the housing (2) and which has a length (29) parallel to the outer wall (5) and along a longitudinal axis of the cable duct, wherein the at least one plate (3, 4) has at least one groove (12, 22) for forming the cable duct (6), which has a groove depth (35) and a groove width.

2. The flush-mounted built-in body (1) according to claim 1, wherein the outer wall (5) is a rear wall (9) of the housing (2).

3. The flush-mounted built-in body (1) according to any one of the preceding claims, wherein the cable duct (6) extends from the cable feedthrough (8) to a cable duct opening (10).

4. The flush-mounted built-in body (1) according to claim 3, wherein the cable duct opening (10) is formed on a side wall (11) of the at least one plate (3, 4) and/or the housing (2).

5. The flush-mounted built-in body (1) according to any one of the preceding claims, wherein the cable duct (6) or the cable feedthrough (8) is sealed with a sealant.

6. The flush-mounted built-in body (1) according to any one of the preceding claims, wherein the cable duct (6) comprises at least one strain relief (13, 14) for the cable (7).

7. The flush-mounted built-in body (1) according to any one of the preceding claims, wherein the at least one plate (3, 4) is slid onto the outer wall (5).

8. The flush-mounted built-in body (1) according to any one of the preceding claims, wherein a plurality of plates (3, 4) is fastened to the outer wall (5).

## Revendications

1. Corps à encastrer (1), destiné à une robinetterie sanitaire, présentant au moins :
a) un boîtier (2), pourvu d'un espace de logement pour une unité fonctionnelle ; et
b) au moins une plaque (3, 4), qui est fixée sur une paroi extérieure (5) du boîtier (2),
**caractérisé en ce qu'**ainsi, l'au moins une plaque (3, 4) constitue avec la paroi extérieure (5) au moins un chemin de câble (6) pour un câble (7), qui s'étend à partir d'un passage de câble (8) de la paroi extérieure (5) du boîtier (2) et qui à la parallèle de la paroi extérieure (5) et le long d'un axe longitudinal du chemin de câble présente une longueur (29), l'au moins une plaque (3, 4) présentant au moins une rainure (12, 22) pour constituer le chemin de câble (6) qui présente une profondeur (35) de rainure et une largeur de rainure.

2. Corps à encastrer (1) selon la revendication 1 du brevet, la paroi extérieure (5) étant une paroi arrière (9) du boîtier (2).

3. Corps à encastrer (1) selon l'une quelconque des revendications précédentes du brevet, le chemin de câble (6) s'étendant du passage de câble (8) vers un orifice (10) pour chemin de câble.

4. Corps à encastrer (1) selon la revendication 3 du brevet, l'orifice (10) pour chemin de câble étant conçu sur une paroi latérale (11) de l'au moins une plaque (3, 4) et / ou du boîtier (2).

5. Corps à encastrer (1) selon l'une quelconque des revendications précédentes du brevet, le chemin de câble (6) ou le passage de câble (8) étant étanchéifié par un produit d'étanchéité.

6. Corps à encastrer (1) selon l'une quelconque des revendications précédentes, le chemin de câble (6) présentant au moins un détendeur de traction (13, 14) pour le câble (7).

7. Corps à encastrer (1) selon l'une quelconque des revendications précédentes, l'au moins une plaque (3, 4) étant emboîtée sur la paroi extérieure (5).

8. Corps à encastrer (1) selon l'une quelconque des revendications précédentes, sur la paroi extérieure (5) étant fixée une pluralité de plaques (3, 4).
